# EUROPEAN PATENT APPLICATION

(11) **EP 4 552 984 A2**
(43) Date of publication of application: **14.05.2025**
(21) Application number: 24206867.4
(22) Date of filing: 16.10.2024
(51) Int. Cl.: B65B 25/14, B65B 35/40, B65B 63/02

(54) **A METHOD AND MACHINERY FOR STACKING AND PACKAGING FOLDED ITEMS**

(30) Priority: 17.10.2023 IN 202321070784
(71) Applicant: Dandekar, Sanjay Madhav, Pune 411052 (IN); Deshpande, Datta Hari, Pune-411041 (IN)
(72) Inventor: DANDEKAR, Sanjay Madhav, 411052 Pune (IN); DESHPANDE, Datta Hari, 411052 Pune (IN); SUTAR, Umesh Baban, 411024 Pune (IN)
(74) Representative: Dr. Gassner & Partner mbB

(57) **Abstract**

The present invention relates to a system (100) and a method (200) for stacking folded items (1) includes a feeding mechanism (10) configured to transport the folded items (1) from a conveyor unit (11) to a transport platform (20). The feeding mechanism (10) sequentially introduces individual folded items (1) into the transport platform (20), which facilitates the transportation of the stack or a partially assembled stack of the folded items (1) from a first stacking area (24) to a designated stacking area (26). The system (100) includes a support mechanism (30) with a support structure (33). The support structure (33) holds the folded items (1) in an upright position and moves them from the first stacking area (24) to the designated stacking area (26). A temporary support (241) securely holds the folded items (1) until the support mechanism returns from the designated stacking area (26)

## Description

### Field of the invention

The present invention relates to a system and a method for stacking of folded Items. More specifically, the present invention relates a system and method for securely holding and transporting folded items in an upright position during the stacking process.

### Background of the invention

Traditional methods for handling and stacking of folded items have employed brushes positioned on each side of the transport platform. These brushes serve to keep the folded items in an upright position as they are conveyed from the folding unit to the stacking area. While this method provides some degree of stability, it has significant limitations.

The primary issue with the use of brushes is their lack of front support for the folded items. Without adequate front support, the folded items are prone to toppling over, especially when subjected to sudden movements or vibrations during transport. This instability can lead to misalignment and damage to the folded items, resulting in packaging errors and inefficiencies in the overall stacking and packaging process. For instance, if a folded item topples over during transport, it may lead to multiple items falling, becoming misaligned, or damaged. This can result in significant downtime as operators must manually re-align the items or clear jams in the system.

Moreover, brushes can cause wear and tear on the folded items over time, compromising the quality of the printed information. The constant friction and pressure exerted by the brushes can lead to scuffing, bending, or other forms of physical damage to the folded items. This damage not only affects the aesthetic quality of the packaging but also risks making the printed information illegible, which is particularly problematic for critical information such as pharmaceutical instructions or medical device guidelines.

Such a solution of providing brushes is described in US11130599 which aims to optimize the stacking and packaging of folded items. Since the brushes do not provide adequate front support, the folded items are prone to instability, leading to frequent toppling over, especially during transport. This can cause misalignment, damage, and inefficiencies in the packaging process, ultimately compromising the quality and integrity of the packaged products.

Therefore, there is a requirement for a system and method for stacking of folded articles which overcomes few or all drawbacks of the existing technologies.

### Object of the invention

An object of the present invention is to provide a system and method for stacking folded items that ensures the folded items remain in an upright position throughout the transport and stacking process.

Another object of the present invention is to overcome the limitations of traditional brush-based systems by introducing a guiding arrangement that offers lateral and front support to prevent the folded items from toppling over.

A further object of the present invention is to enhance the efficiency and reliability of the stacking and packaging process by reducing misalignment and damage to the folded items, thus maintaining the integrity and quality of the printed information they contain.

An additional object of the present invention is to integrate sensors and control mechanisms into the guiding arrangement to enable real-time monitoring and adjustments, ensuring optimal positioning and stability of the folded items during transport.

A still further object of the present invention is to reduce downtime and manual intervention in the stacking and packaging process by providing automated and synchronized control of the guiding, supporting, and stacking mechanisms.

### Summary of the invention

According to the present invention there is provided a system for stacking folded items, which comprises a feeding mechanism configured to transport the folded items from a conveyor unit to a transport platform, where the feeding mechanism sequentially introduces individual folded items into the transport platform, and the transport platform facilitates the transportation of the stack or a partially assembled stack of the folded items from a first stacking area to a designated stacking area.

In an aspect, the system includes a support mechanism linearly movable along the transport direction of the folded item, where the support mechanism includes a support pad and a horizontal rod extending in the transport direction and connected to an actuating device. The support structutre is arranged on a free end of the rod and is adapted to hold the folded items in an upright position during transportation of the folded items along the transport platform, with the support structure being movable in a length direction along the platform to facilitate the movement of a first set of folded items from the first stacking area to the designated stacking area in a first cycle.

In an aspect, a slider arrangement is positioned at the feeding area of the folded item to move the folded items from the first stacking area to the designated stacking area, with the slider arrangement including a pushing tool movably arranged above the transport direction/the transport platform to engage with a stacked folded item or a partially stacked folded item on the first stacking area and move the stacked folded item or a partially stacked folded item from the first stacking area to the designated stacking area.

In an aspect, a temporary support is movably arranged on either side of the transport platform and adjacent to the feeding mechanism to securely hold the folded items in the upright position when the first set of folded items are moved from the first stacking area to the designated stacking area in the first cycle. The temporary support is operably connected to an actuation mechanism, which actuates the guiding arrangement to engage with or hold the folded item and the subsequent folded items transported to the transport platform by the feeding mechanism when the first set of folded items are moved from the first stacking area to the designated stacking area. The temporary support holds the folded items in the upright position until the support mechanism returns from the designated stacking area and engages with the folded items held by the temporary support to initiate a second cycle.

The support mechanism is operatively coupled to a control unit to control the direction of movement of the support structure along the transport platform. The support mechanism includes an actuation cylinder operatively coupled to the rod, enabling controlled linear movement of the support structure along the rod to maintain the folded items in an upright position during transit on the transport platform.

The feeding mechanism may include a pusher unit comprising a cylinder and a pusher, which interfaces with the folded items before entry into the transport platform and is configured to push the folded items into the transport platform toward the first stacking area, with the pusher unit being capable of pneumatic, hydraulic, or motor-driven operation. The slider arrangement includes a guide on the frame that facilitates a sliding motion of the slider arrangement in the transport direction, configured to reset to an original position using a recoil and reset mechanism after moving a folded item from the first stacking area to the designated stacking area.

The temporary support may include two guides operably arranged on either side of the transport platform, the guides being pneumatically actuated to move towards the transport platform to engage with the folded items and provide lateral support to the folded items when the support pad along with the first set of folded items are moved from the first stacking area to the designated stacking area in the first cycle. The system further comprises at least one stopper arranged to extend from the transport platform towards the folded items in the designated stacking area, configured to cooperate with the support pad to maintain the folded items in an upright position.

The control unit is configured to receive signals from proximity sensors or photoelectric sensors integrated into the transport platform and the support mechanism, with the sensors detecting the presence and movement of the folded items and enabling the operation of the support mechanism based on detected positions of the folded items. Each guide of the guiding arrangement is adjustable in height to accommodate various sizes of folded items, ensuring that the folded items remain in an upright position during the transfer of folded items to the transport platform from the feeding area.

In an aspect, a method for stacking folded items is provided. The method comprises transporting folded items from a conveyor unit to a transport platform using a feeding mechanism, sequentially introducing individual folded items into the transport platform, actuating a support mechanism that includes a horizontal rod extending in the transport direction and a support pad arranged on a free end of the horizontal rod to hold or support the folded items in an upright position until a first stack of folded items is collected in a first stacking area, moving the folded items from the first stacking area to a designated stacking area using a slider arrangement with a pushing tool arranged to engage with the first stacked folded items to complete a first cycle of transporting the folded items, holding the first stack of folded items in the designated stacking area by a stopper arrangement arranged to extend from the transport platform towards the folded items in the designated stacking area, with the stopper arrangement configured to cooperate with the support pad to maintain the folded items in the upright position.

The method further comprises securing the folded items transported to the transport platform by the feeding mechanism in an upright position when the slider arrangement moves the folded items in the first cycle, with the folded items secured using a guiding arrangement movably arranged on either side of the transport platform. The guiding arrangement is actuated to engage and support the folded items to provide lateral support to the folded items when the support pad along with the first set of folded items are moved from the first stacking area to the designated stacking area in the first cycle. The support mechanism is returned from the designated stacking area to engage with folded items held by the guiding arrangement to initiate a second cycle, with the guiding arrangement supporting and holding the folded items until the support structure returns from the designated stacking area and engages with the folded items to initiate the second cycle.

The step of moving the folded items includes actuating the slider arrangement to slide along the transport direction and move the folded items from the first stacking area to the designated stacking area, and subsequently retracting the slider arrangement to an original position for the next cycle. The step of securing the folded items includes pneumatically actuating the guiding arrangement to adjust a first guide and a second guide towards the transport platform to provide lateral support to the folded items. The method further involves adjusting the position, height, and force applied by the support pad of the support structure based on the size and weight of the folded items being handled. Controlling the operation of the support mechanism, the slider arrangement, and the guiding arrangement is achieved through signals received from proximity sensors or photoelectric sensors that detect the presence and movement of the folded items. The method further comprises using a control unit to synchronize the operation of the support mechanism, the slider arrangement, and a linear stopper and transverse stopper to maintain the folded items in the upright position within the designated stacking area. The temporary support supports and holds the folded items until the support structure returns from the designated stacking area and engages with the folded items to initiate the second cycle. The method includes the step of disengaging each guide of the temporary support from the folded items and retracting to the initial position once the support mechanism engages with the folded items in the second cycle, and reengaging with another batch of folded items as the cycle repeats.

### Brief description of drawings:

The advantages and features of the present invention will be understood better with reference to the following detailed description and claims taken in conjunction with the accompanying drawings, wherein like elements are identified with like symbols, and in which:
Figure 1a-1a' shows a side view of a machinery for stacking and packaging folded items in accordance with the present invention;
Figure 2a-2b shows a top view of a machinery for stacking and packaging folded items in accordance with the present invention;
Figure 3a shows a top view of a machinery for stacking and packaging folded items in accordance with the present invention;
Figures 4a-4b shows a top view and a side view of the machinery for stacking and packaging folded items in accordance with the present invention;

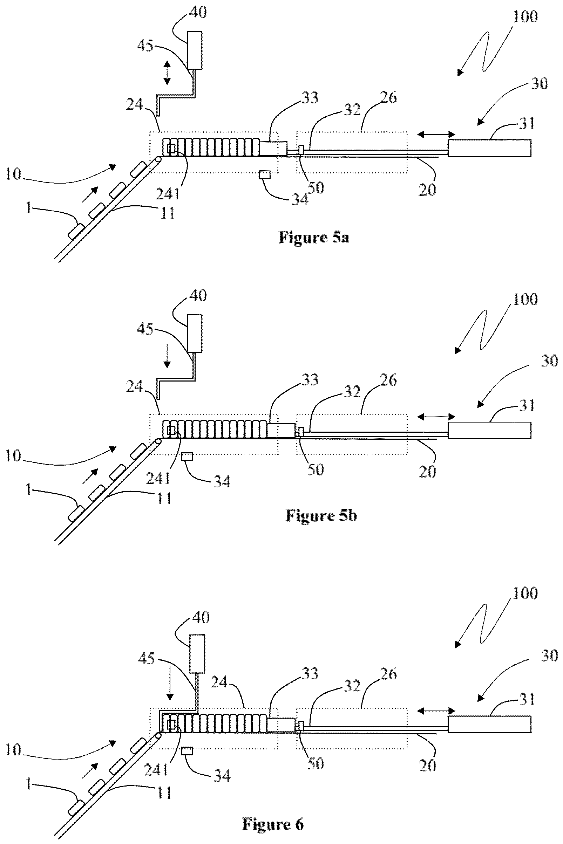

Figure 5a-5b shows a side view of the machinery for stacking and packaging folded items in accordance with the present invention;
Figure 6 shows a side view of the machinery for stacking and packaging folded items in accordance with the present invention;

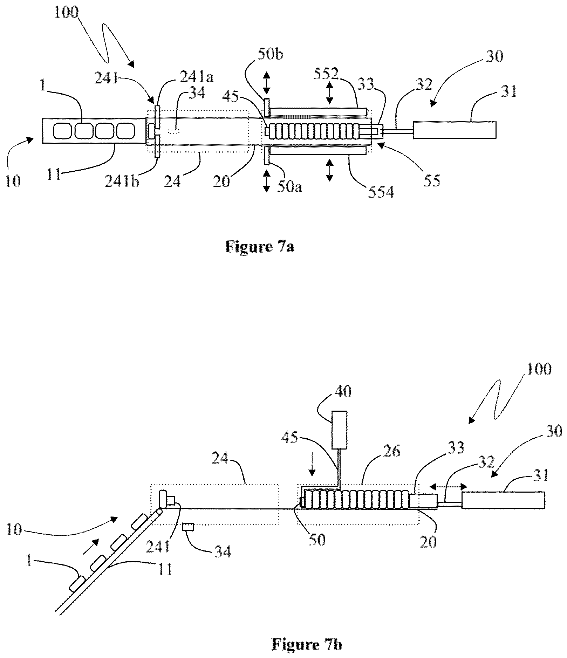

Figure 7a-7b shows a top view and a side view of the machinery for stacking and packaging folded items in accordance with present invention;

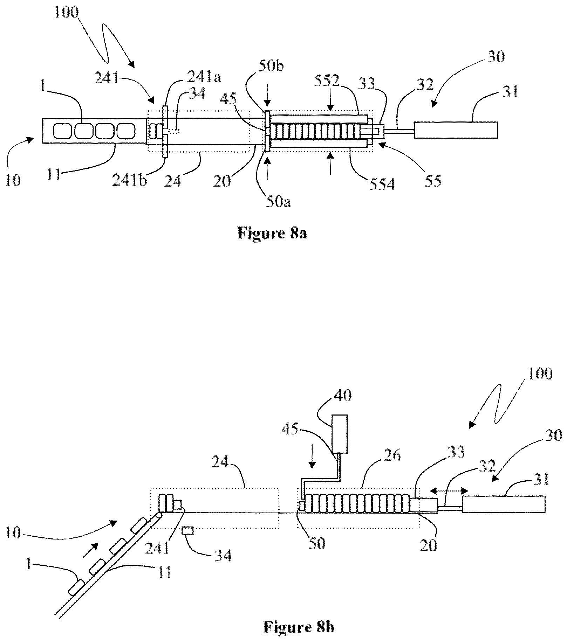

Figure 8a-8b shows a side view of the machinery for stacking and packaging folded items in accordance with the present invention;

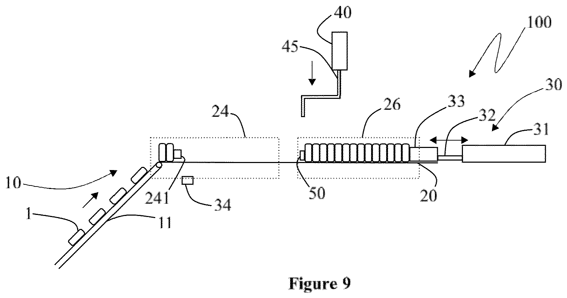

Figure 9 shows a side view of the machinery for stacking and packaging folded items in accordance with the present invention:

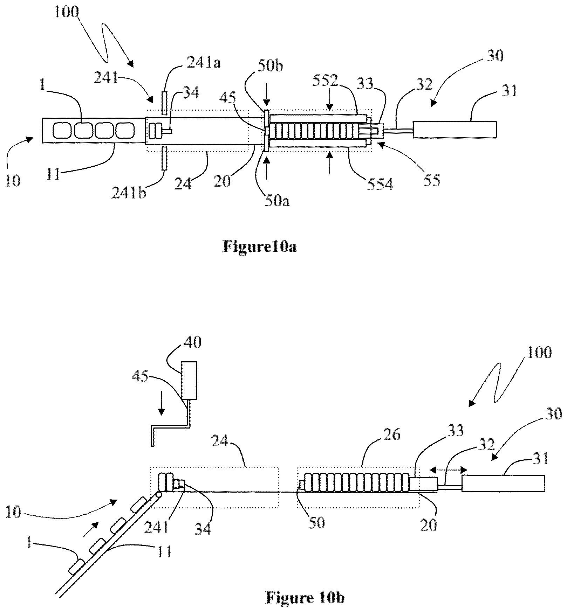

Figure 10a-10b shows a side view of the machinery for stacking and packaging folded items in accordance with the present invention;
Figure 11a-11b shows a side view of the machinery for stacking and packaging folded items in accordance with present invention, and
Figure 12a-12b shows a side view of the machinery for stacking and packaging folded items in accordance with present invention.

### Detailed description of the invention

An embodiment of this invention, illustrating its features, will now be described in detail. The words "comprising," "having," "containing," and "including," and other forms thereof, are intended to be equivalent in meaning and be open-ended in that an item or items following any one of these words is not meant to be an exhaustive listing of such item or items, or meant to be limited to only the listed item or items.

The terms "first," "second," and the like, herein do not denote any order, quantity, or importance, but rather are used to distinguish one element from another, and the terms "a" and "an" herein do not denote a limitation of quantity, but rather denote the presence of at least one of the referenced item.

The disclosed embodiments are merely exemplary of the invention, which may be embodied in various forms.

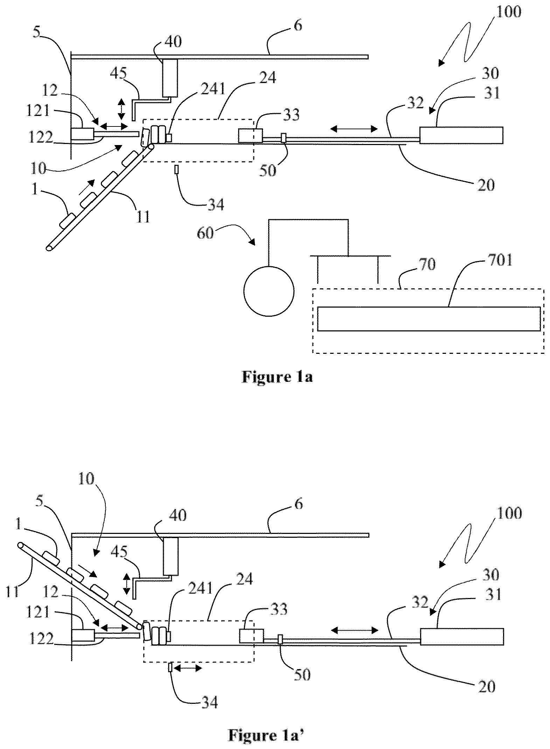

Referring now to figure 1a-1b', a system (100) for stacking and packaging folded items in accordance with the present invention is illustrated. Specifically, the system (100) is used for stacking and packaging folded items/outserts that are securely sealed using glue or any adhesives. The outsert (1) is a paper fold containing information in the form of write-ups, especially printed information or documentation that is folded and inserted into product packaging, such as pharmaceuticals, medical devices, and consumer goods. The machinery (100) includes a feeding mechanism (10), a transport platform (20), a support mechanism (30), a slider arrangement (40), a stopper arrangement (50), a temporary support (241), and a handling apparatus (60).

The feeding mechanism (10) is configured to transport the folded items (1) from a conveyor unit (11) to a transport platform (20). The feeding mechanism (10) is positioned after, preferably not immediately after, an outsert folding unit (not shown), to ensure an organized feeding of the folded items (1). The feeding mechanism (10) sequentially introduces individual folded items (1) into the transport platform (20). Specifically, the feeding mechanism (10) includes a conveyor unit for transferring the folded item (1) to a first stacking area (24) of the transport platform (20). The conveyor unit (11) is arranged in such a way that the folded items (1) are conveyed in the upstream direction. In another embodiment, the conveyor unit (11) is arranged in such a way that the folded items (1) are conveyed in the downstream direction as shown in Figure 1a'.

In the present embodiment, the feeding mechanism (10) includes a pusher unit (12) arranged within the feeding area and on a frame (5) arranged in the feeding area. In the present embodiment, the pusher unit (12) includes a cylinder (121) and a pusher (122). The pusher (122) interfaces with the folded items (1) before the folded items (1) enter the transport platform (20) and pushes the folded items (1) into the transport platform (20) and specifically towards the first stacking area (24). The pusher unit (12) is capable of either pneumatic, hydraulic, or motor-driven operation. As the folded items (1) are placed in the feeding area, the pusher (122) of the pusher unit (12) engages, applying the required force to push each folded item (1) into the transport platform (20) to achieve an upright position of the folded items (1).

The pusher unit (12) is positioned within the feeding area where it interfaces with the folded items (1) before the folded items (1) enter the transport platform (20). In an embodiment, the pusher unit (12) is a linear actuator that facilitates the movement of folded items (1) from the feeding area into the transport platform (20) and eventually to the first stacking area (24). Further, the pusher (122) can be actuated using various methods, including pneumatic systems, hydraulic systems, or motor-driven mechanisms. It may be obvious to a person skilled in the art to configure the pusher unit (12) with any other suitable actuation mechanism.

The feeding mechanism (10) may include a control unit which receives signals from sensors that detect the presence of a folded item (1) ready to be fed into the transport platform (20). Based on these signals, the control unit may activate the pusher (122) of the pusher unit (12) to push the folded items (1) into the first stacking area (24) of the transport platform (20).

Referring again to Figures 1a-1b', the transport platform (20) facilitates transporting the upright stack or a partially assembled stack of folded items (1) into the stacking area. The transport platform (20) is generally a flat platform which provides a platform to convey the upright stack or a partially formed stack of folded items (1) towards the designated stacking area (26).

In an embodiment, the transport platform (20) is movable, such that when the platform detects the specific quantity of folded items (1) in the transport platform (20), it gets activated to move the folded items (1), maintaining an upright stack or partially assembled stack. This motion is at the right angle to the direction of transportation, guiding the folded items (1) into the designated stacking area (26) for further processing. Proximity sensors or photoelectric sensors may be integrated into the transport platform (20) to detect the presence and movement of the folded items (1). Automation controls linked to these sensors regulate the platform's speed and operation, ensuring efficient and synchronized movement of the folded items (1).

Referring now to figure 1a-1b', the support mechanism (30) is arranged along the transport direction of the folded items (1) which is above the transport platform (20). The support mechanism (30) acts as a deadweight, holding the folded items (1) in an upright position during transportation of the folded items (1) on the transport platform (20). The support mechanism (30) includes a support structure (33), a rod (32), and an actuation cylinder (36). The rod (32) extends in the transport direction and is connected to an actuation device (38) or a motorized actuator. The actuation device (38) can be a linear actuator to move the support mechanism (30). The support structure (33) is arranged on a free end of the rod (32) to support the folded items (1).

The support structure (33) is adapted to hold the folded items (1) in an upright position during transportation of the folded items along the transport platform (20). Specifically, the support structure (33) is arranged centrally to the transport platform (20) and is adapted to engage with the front face of the folded items (1) in the upright position. The support structure (33) is a vertical element arranged substantially perpendicular to the rod (32). The support mechanism (30) is constructed with mechanisms to facilitate controlled movement of the folded items (1) along the transport direction. In the present embodiment, the support mechanism (30) is movable in a length direction along the platform and facilitates the movement of a first set of folded items (1) from the first stacking area (24) to the designated stacking area (26) in a first cycle. The first cycle refers to a complete sequence of operations that begins with the initial handling and transportation of a first batch of folded items (1) from the first stacking area (24) and ends with their delivery to the designated stacking area (26).

In another embodiment, the support mechanism (30) includes a support pad (34). The support pad (34) is arranged adjacent to the support pad (33) to support the initial leaflets of the next batch while the support mechanism (30) returns to support the leaflets after the collection of leaflets by the handling apparatus (60). Specifically, the support structure (33) has a C-shaped structure to receive the support pad (34) within the support structure (33). In the first cycle, the support structure (33) along with the support pad (34) provides support to the folded items (1).

When the first stack of folded items (1) reaches the designated stacking area (26), the support pad (34) is already detached from the support structure (33) and travels to the first stacking area (24) to support the next stack of folded items (1). The support pad (34) has an extension rod to facilitate the linear motion of the support pad (34) towards the first stacking area (24). Specifically, the support pad (34) detaches from the support structure (33) to move downward, below the transport platform (20), and travels linearly towards the first stacking area (24). Further, the extension rod along with the support pad (34) moves upward to place the support pad (34) in the transport direction to support the new stack of folded items (1).

Furthermore, after placing the support pad (34) in the transport direction, the extension rod moves linearly against the transport direction, facilitating the movement of the second support pad (50b) towards the new folded items (1) that are being pushed by the pusher (122) in the first stacking area (24). The support pad (34) provides support to the new folded items (1) for maintaining the upright position of the folded items (1) while being transported in the transport direction.

When the folded items (1) move in the transport/conveying direction, the support structure (33) with a cushioning spring along with the rod (32) also moves accordingly. The support mechanism (30) maintains pressure on the folded items (1) to prevent them from collapsing or losing their upright orientation as they advance through the transport platform (20). In the present embodiment, the support mechanism (30) is equipped with an actuating device, which may utilize a motor, gearbox, and a mechanism like a cam or a rack-and-pinion system. The motor provides the necessary rotational force, and this force is then converted into a linear movement of the rod (32) that controls the position of the support structure (33). Further, the support structure (33) is a spring-loaded element that facilitates supporting the folded items (1) in the first stacking area (24) and maintains the upright position of the folded items (1) when the first batch of folded items (1) is transported to the designated stacking area (26).

The support structure (33) of the support mechanism (30) has a flat or contoured surface to make contact with the folded items (1) and apply the necessary pressure to hold the folded items (1) in the upright position during transportation. The surface of the support structure (33) is often coated with materials that provide a good grip without damaging the folded items (1). The surface may be a flat plate, a padded surface, or a specialized gripper designed to securely hold the folded items (1). Further, proximity sensors or encoders may be integrated into the support mechanism (30) to precisely detect the position of the support structure (33). These sensors send signals to the control system to ensure accurate positioning and movement control.

The support mechanism (30) is controlled by a control unit, allowing for precise positioning and activation at specific stages of the folding and stacking process. The control unit governs the timing, movement, and force applied by the support structure (33), ensuring the folded items (1) are securely held in an upright position. Depending on the requirements of the system and the folded items (1) being handled, the position, height, and force of the support structure (33) can often be adjusted to accommodate different sizes and weights of folded items (1).

Further referring to figure 1a, the slider arrangement (40) is positioned at the feeding area of the folded items (1) to move the folded items (1) from the first stacking area (24) to the designated stacking area (26). Specifically, the slider arrangement (40) is arranged on the frame (5) near the feeding area, and the slider arrangement (40) has an inverted L-shaped pushing tool (45) which is movably arranged above the transport direction/the transport platform (20) to engage with a stacked folded item or a partially stacked folded item on the first stacking area (24) and move the stacked folded item or a partially stacked folded item from the first stacking area (24) to the designated stacking area (26). Hereinafter, the inverted L-shaped pushing tool (45) is referred to as the pushing tool (45). It is obvious to a person skilled in the art to configure the shape of the pushing tool (45) according to the number of folded items (1), space constraints, attachment assemblies, or the like. The pushing tool (45) is movable back and forth in the transport direction. Specifically, the frame (5) has a guide (6) that facilitates the sliding motion of the slider arrangement (40) in the transport direction.

When the folded items (1) reach the first stacking area (24) and a sufficient stack or a predefined number of folded items (1) are formed in the first stacking area (24), the slider arrangement (40) is activated to move the folded items (1) towards the designated stacking area (26). Specifically, the pushing tool (45) retracts in a downward direction from an initial position to reach a stack of folded items (1). Once the pushing tool (45) reaches the stack of folded items (1), the slider arrangement (40) slides along the transport direction toward the designated stacking area (26). Once the folded item (1) is placed in the designated stacking area (26), the pushing tool (45) moves upward and configures to the initial position. Further, the slider arrangement (40) retracts to the original position and secures near the feeding area. The slider arrangement (40) may be operable by pneumatic, hydraulic, or motor-driven systems.

After each operation, the slider arrangement (40) needs to reset to its original position to prepare for the next feeding cycle. A recoil and reset mechanism may be integrated to quickly retract the slider arrangement (40) to its initial position after each feed, readying it for the next cycle.

Once the folded items (1) reach the designated stacking area (26), a stopper arrangement (50) extends from or towards the transport platform (20) and engages with the folded items (1), holding the stack of folded items (1) within the space between the stopper arrangement (50) and the support pad (33). The stopper arrangement (50) and the support structure (33) ensure the stack of folded items (1) remains in the upright position. The stopper arrangement (50) and the support structure (33) also provide support to the folded items (1) from both ends.

In the present embodiment, the stopper arrangement (50) in the designated stacking area (26) has a linear stopper (50) and a transverse stopper (55). The linear stopper (50) is adapted to hold the stack in the designated stacking area (20a) in an upright position, avoiding an expansion of the stack or toppling of the folded items (1) in the designated stacking area (26). The transverse stopper (55) includes a first transverse stopper (552) and a second transverse stopper movably arranged in the designated stacking area (26) to hold the stack from a transverse direction. The linear stopper (50) and the transverse stopper (55) are interfaced with a control module to synchronize their operation with the slider arrangement (40).

In the present embodiment, the linear stopper (50) includes a first linear stopper (50a) and a second linear stopper (50b) adapted to travel horizontally in the transport path from a side support of the transport platform (20) to hold the stack (2) in the designated stacking area (26). The first linear stopper (50a) and the second linear stopper (50b) are configurable in an engaged position and a disengaged position. In the engaged position (shown in figure 1), the first linear stopper (50a) and the second linear stopper (50b) are in the path of the transport direction. In the disengaged position, the first linear stopper (50a) and the second linear stopper (50b) are retracted back into the sidewalls of the transport platform (20).

The transverse stopper (55) includes a first transverse stopper (552) and a second transverse stopper (554) movably arranged in the designated stacking area (26) to hold the stack (2) from a transverse direction. The first transverse stopper (552) and the second transverse stopper (554) are elongated members extended along the length of the stack (2) and adapted to move in a direction perpendicular to the transport direction.

The control module is in connection with the slider arrangement (40), the support mechanism (30), the linear stopper (50), and the transverse stopper (55) to facilitate the transportation of the stack and holding the stack in the designated stacking area (26). Upon receiving the stack in the designated stacking area (26) from the first stacking area (24) using the slider arrangement (40), the control unit actuates the linear stopper (50) and the transverse stopper (55) to hold the stack in the upright position in the designated stacking area (26). Upon actuating the linear stopper (50) and the transverse stopper (55), the slider arrangement (40) and the support mechanism (30) are retrieved and moved to the original position for transporting the next stack from the first stacking area (24) to the designated stacking area (26), initiating the second cycle.

Specifically, the pushing tool (45) on the slider arrangement (40) moves upwards and travels back to the original position. The support structure (33) of the support mechanism (30) moves downwards on the transport platform (20), and the actuating device pushes or moves the support mechanism (30) linearly along the length direction of the transport platform (20) towards the first stacking area (24) to support or hold the folded items (1) in the first stacking area (24) to perform the second cycle of transfer.

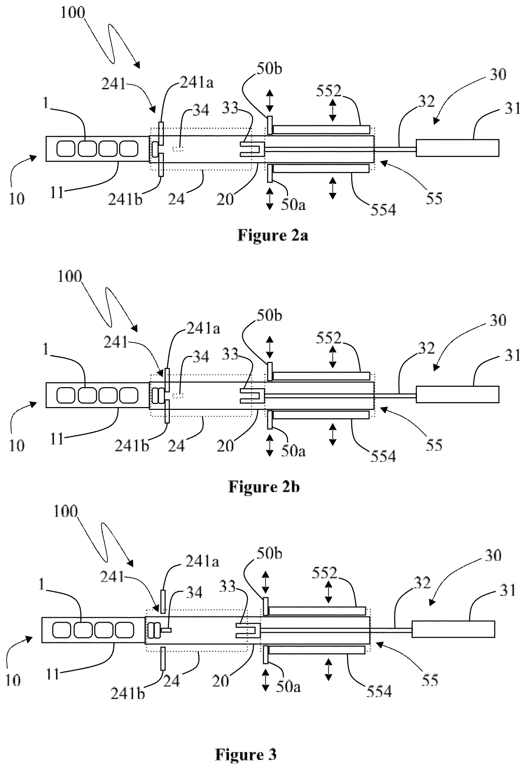

When the support mechanism (30) and the slider arrangement (40) operate in the first cycle, the feeding mechanism (10) still feeds the folded items (1) towards the transport platform (20). To hold and provide support to the folded items (1) temporarily in the transport platform (20), when the support mechanism (30) and the slider arrangement (40) perform the first cycle, the temporary support (241) is provided on the sides of the transport platform (20) as shown in figures 3a-3d.

The temporary support (241) securely holds the folded items (1) in the first stacking area (24) of the transport platform (20) in the upright position when the first batch of folded items (1) is transferred from the first stacking area (24) to the designated stacking area (26).

The temporary support (241) is movably arranged on either side of the transport platform (20) and adjacent to the feeding mechanism (10) to securely hold the folded items (1) in the upright position when the first set of folded items (1) are moved from the first stacking area (24) to the designated stacking area (26) in the first cycle.

The temporary support (241) is operably connected to an actuation mechanism, which actuates the temporary support (241) to engage with or hold the folded items (1) and the subsequent folded items (1) transported to the transport platform (20) by the feeding mechanism (10) when the first set of folded items (1) are moved from the first stacking area (24) to the designated stacking area (26).

In the present embodiment, the temporary support (241) includes two guides operably arranged on either side of the transport platform (20) which are adapted to move away and towards the transport platform (20). The temporary support (241) is a pneumatically operated mechanism which, when actuated, allows the guides to move towards the transport platform (20) and engage with the folded items (1) fed through the feeding area after the first cycle of transfer of the folded items (1) from the first stacking area (24) to the designated stacking area (26). Specifically, the temporary support (241) is arranged in the first designated stacking area (24) to support the initial batch of folded items in the upright position. The temporary support (241) includes a first temporary support (241a) and a second temporary support (241b) arranged on the sidewall of the transport platform (20) and movable in a direction transverse to the transport direction.

Each of the temporary supports are configured to extend from the sidewalls of the transport platform (20) to support the newly coming folded items (1) to the transport platform (20). Specifically, the temporary support (241) includes a first temporary support (241a) and a second temporary support (241b) slidably extending from the sidewalls in the path of folded items (1) to hold, support, and guide the folded items (1) in the transport platform (20). Further, the first temporary support (241a) and the second temporary support (241b) are slidable in the transport direction to securely hold the newly coming folded items (1). When the first stack of folded items (1) is conveyed to the designated stacking area (26), the first guide and the second guide are immediately extended from the sidewalls to support the subsequent folded item (1) pushed by the pusher (122) in the transport platform (20).

In the present embodiment, the first temporary support (241b) and the second temporary support (241b) are a flat projection that synchronously moves towards or away from the transport platform (20) to hold the folded items (1) in the transport platform (20). The temporary supports (241a, 241b) are also movable along the length direction of the transport platform (20) to provide support to the folded items (1). The temporary supports (241a, 241b) are positioned at a height suitable for supporting the folded items (1). As the folded items (1) are fed to the transport platform (20), the temporary supports (241a, 241b) from both sides of the transport platform (20) provide lateral support, assisting the folded items (1) to remain in an upright position.

In an embodiment, the first temporary support (241a) and the second temporary support (241b) are spring-loaded members to facilitate sliding movement along the transport direction.

The temporary support (241) supports and holds the folded items (1) in the upright position until the support mechanism (30) returns from the designated stacking area (26) and engages with the folded items (1) held by the temporary support (241) to initiate the second cycle of transferring a second batch of folded items (1).

In an embodiment, the temporary support (241) includes two sidewalls spaced apart from each other and adapted to receive the folded items (1) within them. The two sidewalls are capable of changing the distance between them to receive the variable sizes of the folded items (1) while travelling on the transport platform (20). The two sidewalls are arranged in such a way that the folded items (1) are maintained in an upright position.

In an embodiment, the temporary support (241) includes a motorized guide arranged on either side of the transport platform (20). The motorized guide holds and guides the folded items (1) in the upright position as they enter the first stacking area (24). The motorized guide may include guiding rails, chutes, or spring-loaded supports that direct the folded items (1) towards the first stacking area (24).

In an embodiment, the temporary support (241) includes pneumatic air cushions or air jets positioned in the feeding area of the transport platform (20). These cushions release a gentle stream of air, creating a cushioning effect that keeps the folded items (1) elevated and in an upright position. The air pressure and flow can be adjusted to suit the specific weight and size of the folded items (1).

In an embodiment, the temporary support (241) includes a roller conveyor with upright guide rails on either side. The guide rails have a smooth surface and are positioned at a height suitable for the folded items (1). As the folded items (1) are fed to the transport platform (20), the guide rails provide lateral support, assisting the folded items (1) to remain upright.

In an embodiment, the temporary support (241) includes non-slip belts in the feeding area to convey the folded items (1). By installing side guides alongside the belts to ensure the folded items (1) are guided and held in the upright position, the non-slip property of the belts prevents the folded items (1) from slipping or tilting.

Once the support mechanism (30) returns and engages with the folded items (1) supported by the temporary support (241), each of the temporary supports (241a, 241b) in the temporary support (241) disengages or cuts contact with the folded items (1) and retracts from the transport platform (20) to the initial position. The temporary supports (241a, 241b) reengage with another batch of the folded items (1) when the slider arrangement (40) pushes or moves the second batch of the folded items (1) from the first stacking area (24) to the designated stacking area (26) in the second cycle.

Upon receiving the stack of folded items (1) in the designated stacking area (26) from the first stacking area (24), the control unit actuates the linear stopper (50) and the transverse stopper (55) to hold the stack of folded items (1) in the upright position in the designated stacking area (26). The linear stopper (50) extends into the transport path to support the stack of folded items (1) from an end that is near the first designated stacking area (20a). The designated stacking area (20a) has a fixed support (not shown) from the other end of the stack of folded items (1) to firmly hold the stack between the fixed support and the linear stopper (50). The control module controls the position of the linear stopper (50) and the transverse stopper (55) to hold the stack in the designated stacking area (26) upon receiving the stack from the first stacking area (24). Then, the control unit of the handling apparatus (60) initiates the handling apparatus (60) to pick the stack of folded items (1) from the designated stacking area (26) and deliver the first stack of folded items (1) into a receptacle arranged in a delivery area (70).

Specifically, the handling apparatus (60) includes a base (601), a plurality of articulated segments (61a, 61b, ...) arranged on the base (601), a holding arrangement (62), and a control unit configured to manage the movement and operation of the handling apparatus (60).

The base (601) is fixed to the ground or to the rigid structure to provide stability to the handling apparatus (60). The base (601) is adapted to receive the plurality of articulated segments (61a, 61b, ...) over there. The plurality of articulated segments (61a, 61b, ...) are movably arranged on the base (601) and connected to each other by joints to allow multidirectional movement.

The holding arrangement (62) includes a first holding element (621) and a second holding element (622). The first holding element (621) and the second holding element (622) are movable in a longitudinal direction facilitating the variable gap between the first holding element (621) and the second holding element (622) to receive the stack (2) therebetween. The first holding element (621) and the second holding element (622) are movable towards each other for firmly gripping the stack (2) in the gap.

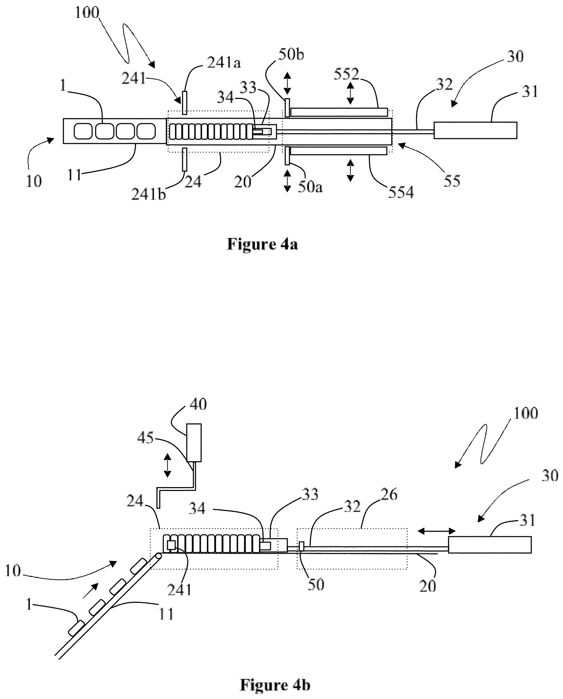

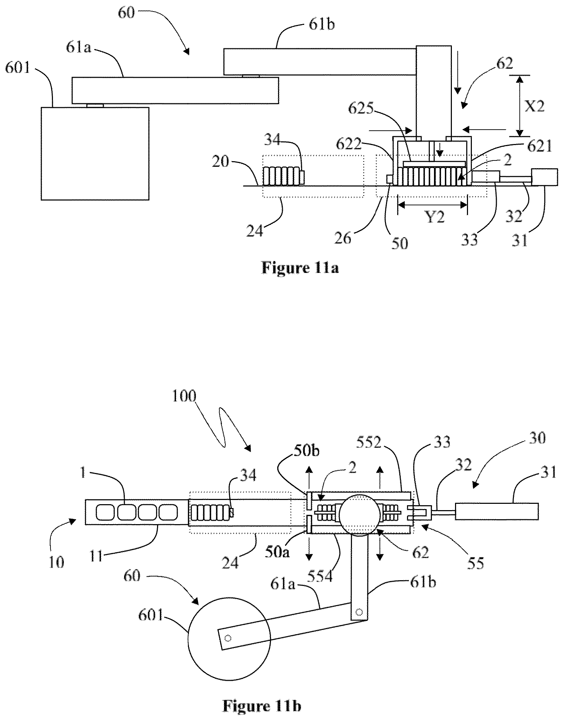

The holding arrangement (62) is positioned (shown in figure 4a, and 4b) over the designated stacking area (26) by actuating the plurality of articulated segments (61a, 61b, ...). The first holding element (621) and the second holding element (622) of the holding arrangement (62) are then actuated to grip the stack (2) from the designated stacking area (26). Specifically, the holding arrangement (62) moves in a downward direction by distance X2 to reach the designated stacking area (26). Upon reaching the designated stacking area (26), the first holding element (621) and the second holding element (622) move toward each other configuring the distance Y2 therebetween to grip the stack (2). The distance Y2 is less than the distance Y1 and sufficient to compress the stack (2) in a longitudinal direction without damaging the folded items of the stack (2) (shown in figures 11a, and 11b). Upon gripping the stack, the control unit communicates with the control module (80) to release the stack (2) by actuating the linear stopper (50) and the transverse stopper (55).

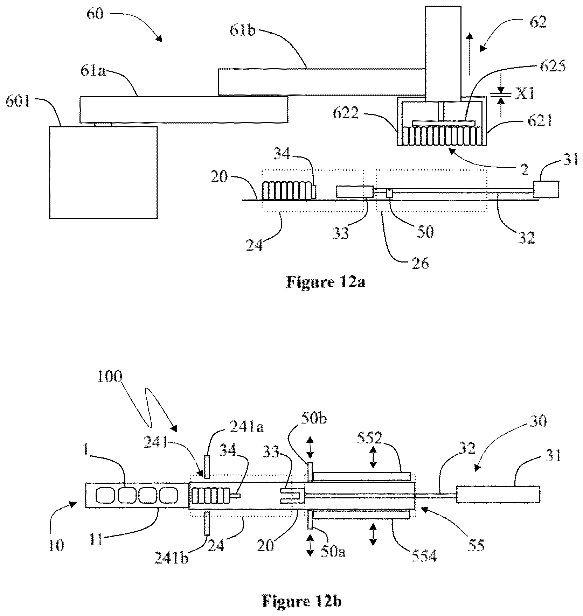

Further, the control unit receives a communication signal from the control module (80) to operate the holding arrangement (62) to pick the stack (2) and move in the upward direction. The holding arrangement (62) is moved in the upward direction until the distance X1 is achieved by the holding arrangement (62) (as shown in figure 12a, and 12b). Simultaneously, the support structure (33) is released by the controller and moves towards the first designated stacking area (24) to support the next stack (2).

The delivery area (70) is provided adjacent to the transport platform (20). The delivery area (70) has at least one receptacle which is adapted to receive the stack of folded items (1) from the designated stacking area (26). Specifically, the handling apparatus (60) is arranged between the transport platform (20) and the delivery area (70) to transport the stack of folded items (1) from the designated stacking area (26) to the delivery area (70).

The foregoing descriptions of specific embodiments of the present invention have been presented for purposes of illustration and description. They are not intended to be exhaustive or to limit the present invention to the precise forms disclosed, and obviously, many modifications and variations are possible in light of the above teaching. The embodiments were chosen and described in order to explain the principles of the present invention best and its practical application, to thereby enabling others skilled in the art to best utilise the present invention and various embodiments with various modifications as are suited to the particular use contemplated. It is understood that various omission and substitutions of equivalents are contemplated as circumstance may suggest or render expedient, but such are intended to cover the application or implementation without departing from the scope of the claims of the present invention.

## Claims

1. A system (100) for stacking of folded items, the system (100) comprising:
a feeding mechanism (10) configured to transport the folded items (1) from a conveyor unit (11) to a transport platform (20), the feeding mechanism (10) sequentially introduces individual folded items (1) into the transport platform (20) and the transport platform (20) facilitates in the transportation of the stack or a partially assembled stack of the folded items (1) from a first stacking area (24) to a designated stacking area (26), **characterized in that** the system (100) comprises:
a support mechanism (30) linearly movable along the transport direction of the folded item (1), wherein the support mechanism (30) includes:
a support structure (33); and
a rod (32) extending in the transport direction and connected to an actuating device (38);
the support structure (33) is arranged on a free end of the rod (32) and is adapted to hold the folded items (1) in an upright position during transportation of the folded items along the transport platform (20), wherein the support mechanism (30) is movable in a length direction along the platform and facilitates in the movement of a first set of folded items (1) from the first stacking area (24) to the designated stacking area (26) in a first cycle;
a slider arrangement (40) positioned at the feeding area of the folded item to move the folded items (1) from the first stacking area (24) to the designated stacking area (26), the slider arrangement (40) includes a pushing tool (45) which is movably arranged above the transport platform (20) to engage with a stacked folded item or a partially stacked folded item on the first stacking area (24) and move the stacked folded item or a partially stacked folded item from the first stacking area (24) to the designated stacking area (26);
a temporary support (241) movably arranged on the either side of the transport platform (20) and adjacent to the feeding mechanism (10) to securely hold the folded items (1) in the upright position when the first set of folded items (1) are moved from the first stacking area (24) to the designated stacking area (26) in the first cycle;
wherein the temporary support (241) is operably connected to an actuation mechanism, which actuates the temporary support (241) to engage with or hold the folded item (1) and the subsequent folded items transported to the transport platform by the feeding mechanism (10) when the first set of folded items (1) are moved from the first stacking area (24) to the designated stacking area (26), the temporary support (241) hold the folded items in the upright position until the support mechanism (30) returns from the designated stacking area (26) and engages with the folded items (1) held by the temporary support (241) to initiate a second cycle.

2. The system (100) as claimed in claim 1, wherein the support mechanism (30) is operatively coupled to a control unit to control the direction of movement of the support structure along the transport platform.

3. The system as claimed in claim 1, wherein the support mechanism (30) includes an actuation cylinder (36) operatively coupled to the horizontal rod (32), the actuation cylinder (36) enabling controlled linear movement of the support structure (33) along the horizontal rod (32) to maintain the folded items (1) in an upright position during transit on the transport platform (20).

4. The system as claimed in claim 1, wherein the feeding mechanism (10) includes a pusher unit (12) comprising a cylinder (121) and a pusher (122), the pusher interfacing with the folded items (1) before entry into the transport platform (20), and configured to push the folded items (1) into the transport platform (20) toward the first stacking area (24), the pusher unit being capable of pneumatic, hydraulic, or motor-driven operation.

5. The system as claimed in claim 1, wherein the slider arrangement (40) includes a guide (6) on the frame (5) that facilitates a sliding motion of the slider arrangement (40) in the transport direction, the slider arrangement (40) being configured to reset to an original position using a recoil and reset mechanism after moving a folded item (1) from the first stacking area (24) to the designated stacking area (26).

6. The system (100) as claimed in claim 1, wherein the temporary support (241) includes two temporary supports (241a, 241b) operably arranged on either side of the transport platform (20), the temporary supports (241a, 241b) being pneumatically actuated to move towards the transport platform (20) to engage with the folded items (1) and provide lateral support to the folded items when the support structure (33) along with the first set of folded items are moved from the first stacking area (24) to the designated stacking area (26) in the first cycle.

7. The system (100) as claimed in claim 1, wherein the temporary support (241) includes a pair of motorized temporary supports (241a, 241b) positioned on either side of the transport platform (20), the motorized temporary supports (241a, 241b) being capable of moving towards and away from the transport platform (20) to engage with the folded items (1) and maintain the folded items in an upright position.

8. The system (100) as claimed in claim 6, wherein each guide of the temporary support (241) is adjustable in height to accommodate various sizes of folded items (1), ensuring that the folded items (1) remain in an upright position during the transfer of folded items to the transport platform (20) from the feeding area.

9. The system (100) as claimed in claim 6, wherein the temporary support (241) includes a first temporary support (241a) and a second temporary support (241b) slidably extending from sidewalls of the platform in the path of folded items (1) to hold, support, and guide the folded items (1) in the transport platform (20), the first temporary support (241a) and the second temporary support (241b) are slidable in the transport direction to securely hold the folded items (1) when the first stack of folded items (1) is conveyed to the designated stacking area (26).

10. The system (100) as claimed in claim 9, wherein the first temporary support (241a) and the second temporary support (241b) extend from the sidewalls to support the subsequent folded item (1) pushed by the pusher (122) in the transport platform (20) when the first stack of folded items (1) is conveyed to the designated stacking area (26).

11. The system (100) as claimed in claim 1, further comprising at least one stopper arrangement (50) arranged to extend from the transport platform (20) towards the folded items (1) in the designated stacking area (26), the stopper arrangement is configured to cooperate with the support structure (33) to maintain the folded items (1) in an upright position.

12. The system (100) as claimed in claim 1, wherein the control unit is configured to receive signals from proximity sensors or photoelectric sensors integrated into the transport platform (20) and the support mechanism (30), the sensors detecting the presence and movement of the folded items (1) and enabling the operation of the support mechanism (30) based on detected positions of the folded items (1).

13. The system as claimed in claim 1, further comprising a delivery area (70) adjacent to the transport platform (20), the delivery area (70) including at least one receptacle adapted to receive the stack of folded items (1) from the designated stacking area (26), and a handling apparatus (60) configured to transport the stack of folding items from the designated stacking area (26) to the delivery area (70).

14. A method (200) for stacking folded items, the method (200) comprising the steps of: transporting folded items (1) from a conveyor unit to a transport platform (20) using a feeding mechanism (10);
sequentially introducing individual folded items (1) into the transport platform (20);
actuating a support mechanism (30) that includes a horizontal rod extending in the transport direction and a support pad arranged on a free end of the horizontal rod to hold or support the folded items (1) in an upright position until a first stack of folded items is collected in a first stacking area;
moving the folded items (1) from the first stacking area (24) to a designated stacking area (26) using a slider arrangement (40) with a pushing tool (45) arranged to engage with the first stacked folded items to complete a first cycle of transporting the folded items (1);
holding the first stack of folded items in the designated stacking area (26) by a stopper arrangement arranged to extend from the transport platform (20) towards the folded items (1) in the designated stacking area (26), the stopper arrangement is configured to cooperate with the support structure (33) to maintain the folded items (1) in the upright position;
securing the folded items (1) transported to the transport platform by the feeding mechanism (10) in an upright position when the slider arrangement moves the folded items in the first cycle, the folded items are secured using a temporary support (241) movably arranged on either side of the transport platform, wherein the guiding arrangement is actuated to engage and support the folded items (1) to provide lateral support to the folded items when the support pad along with the first set of folded items are moved from the first stacking area to the designated stacking area in the first cycle;
returning the support mechanism (30) from the designated stacking area (26) to engage with folded items held by the temporary support (241) to initiate a second cycle, wherein the temporary support (241) supports and holds the folded items (1) until the support mechanism (30) returns from the designated stacking area (26) and engages with the folded items to initiate the second cycle.

15. The method (200) as claimed in claim 14, wherein the step of moving the folded items (1) includes actuating the slider arrangement (40) to slide along the transport direction and move the folded items (1) from the first stacking area (24) to the designated stacking area (26), and subsequently retracting the slider arrangement to an original position for the next cycle.
